(19) **Europäisches Patentamt**

**European Patent Office**

**Office européen des brevets**

(11) **EP 1 178 581 A2**

(12) **EUROPEAN PATENT APPLICATION**

(43) Date of publication:
06.02.2002  Bulletin 2002/06

(51) Int Cl.$^7$: **H01S 3/30**

(21) Application number: 01109695.5

(22) Date of filing: 19.04.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: 06.07.2000 US 216079
17.07.2000 US 617862

(71) Applicant: **NEC Research Institute, Inc.**
**Princeton, New Jersey 08540 (US)**

(72) Inventors:
• **Wang, Lijun**
**NJ 08536 (US)**
• **Kuzmich, Alexander**
**Plainsboro, NJ 08536 (US)**
• **Dogariu, Arthur**
**NJ 08619 (US)**

(74) Representative: **Betten & Resch**
**Patentanwälte Postfach 10 02 51**
**80076 München (DE)**

(54) **Method and apparatus for gain-assisted superluminal light propagation**

(57)    Methods and apparatus for producing a region of anomalous dispersion in an atomic vapor are provided. The method includes the steps of: providing an atomic vapor having an atomic transition frequency and at least two ground states; introducing a first Raman pump light beam of a first frequency through the atomic vapor; introducing a second Raman pump light beam through the atomic vapor, the second Raman pump light beam having a second frequency different from the first frequency; and detuning the first and second Raman pump light beams from the atomic transition frequency of the atomic vapor towards the at least two ground states. Wherein two Raman gain peaks are thereby produced resulting in a region of anomalous dispersion therebetween. Methods and apparatus are also provided in which a probe beam is introduced through the atomic vapor in the region of anomalous dispersion thereby achieving superluminal propagation thereof. Also provided are apparatus for the advanced detection of an input optical signal and for the advanced detection of the failure of an input optical signal.

**FIGURE 2**

EP 1 178 581 A2

## Description

BACKGROUND OF THE INVENTION

1. Field of the Invention

The present invention relates generally to gain-assisted superluminal light propagation and, more particularly, to methods and apparatus for achieving such.

2. Prior Art

The speed of light in vacuum, c is commonly assumed to be the upper limit of the speed of all moving objects, including light pulses and signals, as implied by Einstein's special relativity and principle of causality. Previously, it has been proposed to use various phenomena including the anomalous dispersion near an absorption line, nonlinear, and linear gain lines, or in a tunneling barrier to observe "faster than *c*" propagation of light pulses. However, in all experiments light pulses experienced either very large absorption or severe reshaping that resulted in controversies over their interpretations.

When a light pulse of frequency $\nu$ and bandwidth $\Delta\nu$ enters a linear dispersive medium of an optical refractive index $n(\nu)$, the light pulse propagates at the group velocity $v_g = c/n_g$, where $v_g$ is the group velocity and $n_g = n(\nu) + \nu dn(\nu)/d\nu$ is the group velocity index. If the group index remains constant over the pulse bandwidth $\Delta\nu$, the light pulse maintains its shape during propagation. In recent experiments involving "Electromagnetically Induced Transparency" (EIT), the group index was greatly enhanced using the lossless normal dispersion region between two closely placed absorption lines. Thus, the group velocity of light was dramatically reduced to as slow as 8 m/sec. Conversely, Steinberg, A. M. & Chiao, R.Y. Dispersionless, highly superluminal propagation in a medium with a gain doublet, *Phys. Rev. A* **49,** 2071-2075 (1994) (hereinafter "Steinberg et al.") has shown that between two closely placed gain lines, an anomalous dispersion region appears where $\nu dn(\nu)/d\nu$ is negative and its magnitude can become large. Steinberg et al. and Mitchell, M.W. & Chiao, R.Y. Causality and negative group delays in a simple bandpass amplifier, *Am. J. Phys.* **66,** 14-19 (1998) have shown that in this situation, the group velocity of a light pulse can exceed c and can even become negative.

SUMMARY OF THE INVENTION

Therefore it is an object of the present invention to provide a method and apparatus for achieving gain-assisted superluminal light propagation which propagates through an atomic gaseous medium.

It is a further object of the present invention to provide a method and apparatus for achieving gain-assisted superluminal light propagation while preserving the shape of the propagated light pulse and minimizing light absorption.

The present application demonstrates a gain-assisted linear anomalous dispersion effect that results in a superluminal light propagation with a negative group velocity through an atomic gaseous medium. Two Raman gain peaks are placed closely together to obtain an essentially lossless anomalous dispersion region and hence "Gain-Assisted Superluminality" (GAS). Raman gain is well known in the art. It is essentially where energy from a pump beam is absorbed by an atomic medium and the absorbed energy is transferred to a probe beam thereby amplifying the probe beam. The group velocity of a pulse in this region exceeds c and can even become negative, whilst the shape of the pulse is preserved. The light pulse propagates through the atomic vapor cell and exits at the opposite side faster than light traveling through the same distance in a vacuum. Experimentally, in one embodiment a negative group velocity index of $n_g = -310(\pm 5)$ was measured. Therefore, in this embodiment a light pulse propagating through an atomic vapor cell appears at the exit side earlier than propagating through the same distance in vacuum by a time difference that is 310 times the vacuum light propagation time. Thus, the peak of the pulse exits the cell before it enters. This observed superluminal light propagation is not at odds with causality.

Accordingly, a method for producing a region of anomalous dispersion in an atomic vapor is provided. The method comprises the steps of: providing an atomic vapor having an atomic transition frequency and at least two ground states; introducing a first Raman pump light beam of a first frequency through the atomic vapor; introducing a second Raman pump light beam through the atomic vapor, the second Raman pump light beam having a second frequency different from the first frequency; and detuning the first and second Raman pump light beams from the atomic transition frequency of the atomic vapor towards the at least two ground states, wherein two Raman gain peaks are thereby produced resulting in a region of anomalous dispersion therebetween.

Also provided is an apparatus for producing a region of anomalous dispersion in an atomic vapor. The apparatus comprises: an atomic vapor having an atomic transition frequency and at least two ground states; a first laser for introducing a first Raman pump light beam of a first frequency through the atomic vapor; a second laser for introducing a second Raman pump light beam through the atomic vapor, the second Raman pump light beam having a second frequency different from the first frequency; and means for detuning the first and second Raman pump light beams from the atomic transition frequency of the atomic vapor towards the at least two ground states; wherein two Raman gain peaks are thereby produced resulting in a region of anomalous dispersion therebetween.

The apparatus for producing a region of anomalous dispersion in an atomic vapor preferably further comprises a closed cell for containing the atomic vapor therein, means for producing a magnetic field in the closed cell parallel to the direction of the propagation of the first and second Raman pump light beams, and a magnetic shield around the closed cell for shielding the magnetic field from earth's magnetic field.

Further provided is a method for achieving gain assisted superluminal light propagation of a probe beam. The method comprises the steps of: providing an atomic vapor having an atomic transition frequency and at least two ground states; preparing the atoms of the atomic vapor into one of the at least two ground states; introducing a first Raman pump light beam of a first frequency and first polarization through the atomic vapor; introducing a second Raman pump light beam through the atomic vapor, the second Raman pump light beam having the first polarization and a second frequency different from the first frequency; detuning the first and second Raman pump light beams from the atomic transition frequency of the atomic vapor towards the at least two ground states, wherein two Raman gain peaks are thereby produced resulting in a region of anomalous dispersion therebetween; and introducing the probe beam of a second polarization opposite from the first polarization through the atomic vapor in the region of anomalous dispersion thereby achieving superluminal propagation thereof.

Still further provided is an apparatus for achieving gain assisted superluminal light propagation of the probe beam. The apparatus comprises: an atomic vapor having an atomic transition frequency and at least two ground states; means for preparing the atoms of the atomic vapor into one of the at least two ground states; a first laser for introducing a first Raman pump light beam of a first frequency and first polarization through the atomic vapor; a second laser for introducing a second Raman pump light beam through the atomic vapor, the second Raman pump light beam having the second polarization and a second frequency different from the first frequency; means for detuning the first and second Raman pump light beams from the atomic transition frequency of the atomic vapor towards the at least two ground states, wherein two Raman gain peaks are thereby produced resulting in a region of anomalous dispersion therebetween; and a third laser for introducing a probe beam of a second polarization opposite from the first polarization through the atomic vapor in the region of anomalous dispersion thereby achieving superluminal propagation thereof.

The apparatus for achieving gain assisted superluminal light propagation of the probe beam preferably further comprises: a closed cell for containing the atomic vapor therein, the closed cell having an interior defined by inside surfaces; means for producing a magnetic field in the closed cell parallel to the direction of the propagation of the first and second Raman pump light beams; a magnetic shield around the closed cell for shielding the magnetic field from earth's magnetic field; and a coating affixed to the inside surfaces of the closed cell for maintaining ground state spin polarization of the atomic vapor therein.

Yet still further provided are apparatus implementing useful applications of the above methods and apparatus. In a first useful application, an apparatus for the advanced detection of an input optical signal is provided. The apparatus for the advanced detection of an input optical signal comprises: a beam splitter for splitting the input optical signal into first and second beams; an optical device in which the first beam is input; means for accelerating the second beam to superluminal velocity; and a processor in which the accelerated second beam is input, the processor detects the presence of the accelerated second beam and controls the optical device in advance of the arrival of the first beam at the optical device based on the input of the accelerated second beam.

The optical device preferably comprises an optical switch for switching the second beam to one of at least two optical circuits wherein the processor selectively controls the optical switch based upon the detection of the accelerated second beam.

In a second useful implementation of the above methods and apparatus, an apparatus for the advanced detection of the failure of an input optical signal is provided. The apparatus for the advanced detection of the failure of an input optical signal comprises: a beam splitter for splitting the input optical signal into first and second beams; an optical device in the path of the first beam; means for accelerating the second beam to superluminal velocity; and a processor in the optical path of the accelerated second beam for detecting a failure in the second accelerated beam and controlling the optical device in advance of the failure of the first beam at the optical device. The failure can be either a data error in the input optical signal or an interruption in the input optical signal.

The optical device preferably comprises an optical switch which switches to receive a second input optical beam and relaying the same to an optical circuit wherein the processor selectively controls the optical switch based upon the detection of the failure of the accelerated second beam.

BRIEF DESCRIPTION OF THE DRAWINGS

These and other features, aspects, and advantages of the methods and apparatus of the present invention will become better understood with regard to the following description, appended claims, and accompanying drawings where:

Figure 1a illustrates Gain-Assisted Superluminality (GAS) in a Schematic atomic level diagram.

Figure 1b illustrates a graph showing frequency-dependent gain coefficients and refractive indices for a probe light beam propagating through an atomic medium with the level structure shown in Figure 1a.

Figure 2 illustrates an apparatus for achieving superluminal light propagation through a vapor cell.

Figure 3 illustrates a graph showing measured refractive index and gain coefficient with parameters $\nu_1$, $\nu_2$, and $\gamma$ obtained experimentally.

Figure 4 illustrates a graph showing measured pulse advancement for a light pulse traversing through the apparatus of Figure 2.

Figure 5 illustrates a schematical representation of an advance signal processing apparatus having the apparatus of Figure 2.

DETAILED DESCRIPTION OF THE PREFERRED EMBODIMENT

A negative group velocity of light is somewhat counter-intuitive but can be understood as follows. For a medium of length L, it takes a propagation time $L/v_g = n_g L/c$ for a light pulse to traverse. Compared with the propagation time for light to traverse the same distance in vacuum, i.e., the vacuum transit time L/c, the light pulse that enters the medium will exit at a moment that is delayed by a time difference $\Delta T = L/v_g - L/c = (n_g - 1) \cdot L/c$. When $n_g < 1$, referred to as anomalous dispersion, the delay time, DT, is negative, resulting in an advancement. In other words, when incident on a medium with group index $n_g < 1$, a light pulse can appear on the other side sooner than if it had traversed the same distance in vacuum, contrary to traditional misconceptions that a negative group velocity of light has no physical meaning. Furthermore, when the group index becomes negative, the pulse advancement $-\Delta T = (1 - n_g)L/c$ becomes larger than the vacuum transit time L/c. In other words, it appears as if the pulse is leaving the cell even before it enters. This somewhat counterintuitive phenomenon is a consequence of the wave nature of light and can be shown mathematically to be consistent with Einstein's special relativity and principle of causality.

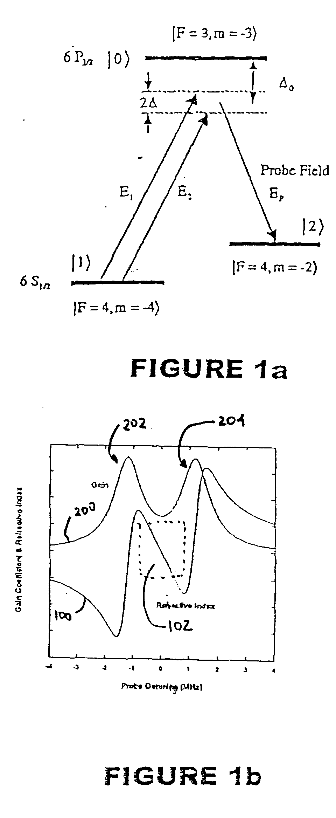

The principle of the experimental realization of a lossless anomalous dispersion region and hence GAS is illustrated in Figure 1a. Figure 1a is illustrative of the phenomenon and is not to be considered limiting, as the gaseous medium of atoms may have more than one excited state and two ground states. By ground states, it is meant herein one of the hyperfine ground states of Cesium when a magnetic field is applied to the gaseous atomic vapor. Figure 1a shows a gaseous medium of atoms each of which has three levels: an excited state $|0\rangle$ and two ground states $|1\rangle$ and $|2\rangle$. All atoms are first prepared to be in a ground state $|1\rangle$ via optical pumping. For simplicity, the Doppler shift is ignored and the atoms are assumed to be at rest. Two strong continuous-wave (CW) Raman pump light beams $E_1$ and $E_2$ are applied that propagate through the atomic medium. The frequencies of $E_1$ and $E_2$, namely, $\nu_1$ and $\nu_2$, are different by a small amount, e.g., $2\Delta$, and both fields are detuned from the atomic transition frequency $\nu_{01}$ ($|0\rangle$ to $|1\rangle$) by a large average amount $\Delta_0$. Since the Rabi frequencies associated with the fields $E_1$ and $E_2$ are small compared with the common detuning $\Delta_0$, the atoms mostly remain in state $|1\rangle$. When a probe light beam $E_P$ is introduced, a Raman transition can occur causing an atom to absorb a Raman pump photon from the fields $E_1$ or $E_2$ and emit a photon into the field $E_P$ while substantially simultaneously therewith making a transition from $|1\rangle$ to $|2\rangle$ thereby creating the closely spaced Raman gain peaks as shown in Figure 1(b). Obviously, there are two frequencies where the gain in the probe field is maximized. The maximum gain occurs when the probe field is resonant with the Raman transitions caused by either of the two pump fields $E_1$ and $E_2$. The optical susceptibility of the probe field hence can be derived as,

$$\chi(\nu) = \frac{M_1}{\nu - \nu_1 + i\gamma} + \frac{M_2}{\nu - \nu_2 + i\gamma} \qquad (1)$$

Where

$$M_{1,2} = \frac{|\mu_{02}|^2}{4\pi\hbar\varepsilon_0} \frac{|\Omega_{1,2}|^2}{\Delta_0^2} N$$

with $\mu_{02}$, $\Omega_{1,2}$, and $N$ are the dipole moment of the $|0\rangle$ to $|2\rangle$ atomic transition, the Rabi frequencies of the Raman pump fields $E_1$ and $E_2$, and the effective atomic density difference of states $|1\rangle$ and $|2\rangle$, respectively. $\gamma$ is the Raman transition inverse lifetime. An example of the refractive index 100 and the gain coefficient 200 obtained using the susceptibility given in Equation (1) are shown in Figure 1b. In the region between the two gain peaks 202, 204, an anomalous dispersion region 102 (i.e., where $n_g < 1$) appears.

Of course, in a gaseous atomic medium, there is Doppler broadening where, for atoms moving at different velocities in the light propagation direction, the common detuning $\Delta_0$ is shifted The effects of Doppler broadening are twofold. First, the M-factors in Eq. (1) are replaced by

$$M_{1,2} = \frac{|\mu_{02}|^2}{4\pi\hbar\varepsilon_0} \int dV \frac{|\Omega_{1,2}|^2}{(\Delta_0 + \nu \cdot V/c)^2} N(V)$$

where $N(V)$ is the effective density of atoms in the velocity group V. The common detuning $\Delta_0$ is replaced by

the Doppler detuning $\Delta_0 + v \cdot V/c$. However, the quadratic dependence of the coefficient $M$ on the Doppler detuning prevents cancellation. Second, inside the Doppler profile, the expression for $M$ given above appears to become singular when the detuning $\Delta_0 + v \cdot V/c$ vanishes. This is automatically avoided in practice since for atoms with detuning $\Delta_0 + v \cdot V/c$ less than a certain line-width containing contributions from the natural line-width and power broadening, the Raman pump beams act like reversed optical pumping beams that deplete these velocity groups. For atoms in the velocity group where the effective detuning $\Delta_0 + v \cdot V/c$ vanishes, $N(V)$, the atom number difference also vanishes.

Finally, the atoms that are pumped away from the level $|1\rangle$ act as a weak broadband absorber. This merely compensates the small residual gain in the region between the two Raman gain peaks 202, 204 shown in Figure 1b.

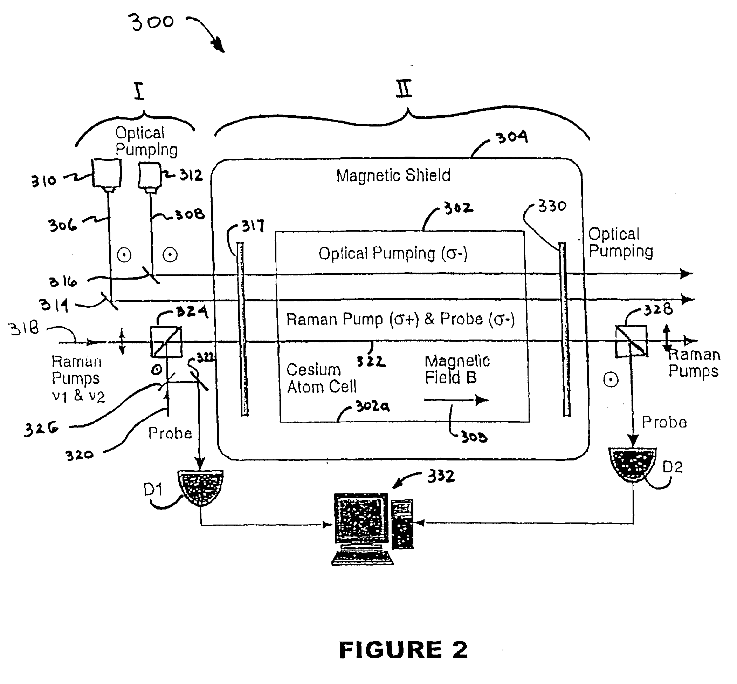

Referring now to Figure 2, there is illustrated an apparatus being generally referred to by reference numeral 300. Although Figure 2 and the discussion herein below refer to a specific embodiment, the teachings therein are general and are not to be limited therefor. The apparatus includes an atomic Cesium (Cs) vapor cell 302 containing Cesium atoms at 30°C. The Cesium is vaporized using techniques known in the art which could include heating in an oven. Cesium is given by way of example only and not to limit the scope of the present invention. Those skilled in the art will recognize that other atomic vapors, preferably from an alkali metal, such as Rubidium and the like, can be utilized without departing from the scope or spirit of the present invention.

In Cesium, the nucleus has spin 7/2 which combines with the spin ½ of the valence electron to produce ground energy level (i.e., $6^2S_{1/2}$) states of total angular momentum F=3 and F=4. These states have a slight difference in energy. The energy of the sublevels of these hyperfine states as a function of applied magnetic field are well known in the art. For zero applied field, the states separate into two hyperfine states of seven F=3 sublevels and nine F=4 sublevels. These states differ in energy by the hyperfine energy difference.

The vapor cell 302 preferably comprises a 6-cm long Pyrex glass cell coated with a material known in the art, such as paraffin 302a, for the purpose of maintaining ground state spin polarization. Other materials besides Pyrex can be utilized, however the material must be substantially optically transparent and it cannot react with the atomic vapor. Paraffin is used as a coating because it helps preserve the ground state levels.

The vapor cell 302 is placed in a small (e.g., 1.0 Gauss) uniform magnetic field 303 parallel to the light propagation direction. The magnetic field produces a magnetic splitting of the sixteen energy levels. The amount of splitting is well known in the art and is a function of increasing magnetic field. The magnetic field is generated by methods known in the art, the description of which is omitted for the sake of brevity. The magnetic field is preferably shielded by shield 304, preferably lead sheets, to prevent interference from the earth's magnetic field.

In a first region (I), two pumping laser beams 306, 308 are introduced into the vapor cell 302 to optically pump the Cesium atoms into the ground state hyperfine magnetic sub-level $|F = 4, m = -4\rangle$ that serves as state $|1\rangle$ (see Figure 1a). The two pumping laser beams 306, 308 are generated by lasers 310, 312, respectively, and reflected into the vapor cell 302 by mirrors 314, 316. A first quarter wave plate 317 converts the linear polarization of the two pumping laser beams 306, 308 into circularly polarized beams. One of the pumping laser beams 306 is left-hand (σ-) polarized from a narrow line width diode laser 310 and tuned to the 852 nm $D_2$ transitions to empty the $6S_{1/2}$ F=3 hyperfine ground state (see Figure 1a). The other pumping laser beam is also left hand polarized (σ-) to optically pump the cesium atoms in the vapor cell 302 into the $|F = 4, m = -4\rangle$, state (ground state $|1\rangle$) via the $D_1$ transitions to the $6P_{1/2}$ hyperfine excited states (see Figure 1a). When the Cesium atoms inside the vapor cell 302 collide with the paraffin-coated glass walls 302a, they change their velocities inside the Doppler profile while remaining in the ground state $|F = 4, m = -4\rangle$ and hence the majority of the Cesium atoms inside the vapor cell 302 are prepared into this state.

In a second region (II), three light beams derived from the same laser (not shown) propagate co-linearly through the vapor cell 302. Two strong CW Raman pump beams 318 are converted from linear polarization to right-hand circular polarization (σ +) by the first quater wave plate 317 and are preferably frequency-shifted by 2.7 MHz using two acousto-optical modulators (A/O) (not shown). The line-widths of the A/O modulators are preferably about 20 kHz. The Raman pump beams 318 are transmitted through a polarization combining cube 324 and directed into the vapor cell 302.

A third light beam, referred to as a probe beam 320, has an opposite polarization as the Raman pump beams 318 and is preferably converted from linear polarization to left-hand circular polarization (σ-) by the first quarter wave plate 317 and by using another A/O (not shown) can be tuned in frequency and operate either in CW or pulsed mode. The probe beam 320 is reflected into the Raman pump beams 318 by the polarization combining cube 324. The Raman pump beams 318 and probe beam 320 are shown as a single beam 322 in the vapor cell 302. The preempted hyperfine magnetic sublevel $|F = 4, m = -2\rangle$ serves as the Raman transition final state $|2\rangle$. In this example, the intermediate Raman transitional state $|0\rangle$ is served primarily by the hyperfine sublevel $|F = 4, m = -3\rangle$ of the $6P_{3/2}$ excited state with additional contributions from transitions via $|F = 3, m = -3\rangle$ and $|F = 5, m = -3\rangle$ hyperfine sublevels.

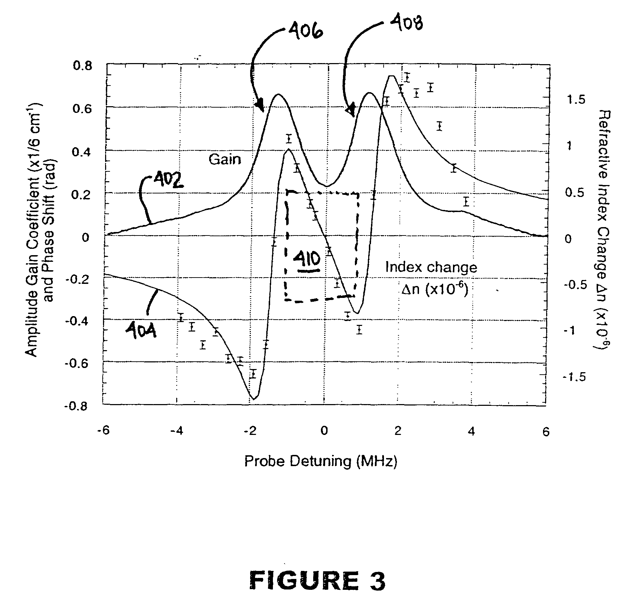

First, the Raman probe beam is operated in a tunable CW mode to measure the gain and refractive index of the atomic system as a function of the probe frequency detuning. Figure 3 shows the measured gain coefficient 402 and the refractive index 404. In order to obtain the gain coefficient 402, the intensity of the transmitted probe beam 320 is measured as a function of probe frequency. The gain coefficient is then extracted. The refractive index 404 is measured using an RF interferometric technique known in the art. The superposed curve is obtained from Equation (1) using parameters obtained from the gain measurement. From Figure 3, in the embodiment shown, it can readily be seen that a negative change of Dn= $-1.8 \times 10^{-6}$ in the refractive index occurs over a narrow probe frequency range of Dn=1.9MHz between the two gain peaks 406, 408 resulting in a region of anomalous dispersion 410. Using the expression of the group index, the result $n_g$=-330 ($\pm$30) is obtained in that frequency region. The 10% error reflects the accuracy of the phase measurement.

Referring back to Figure 2, a pulsed Raman probe beam is then employed to observe the superluminal propagation. For example, a near Gaussian probe pulse with a 3.7 msec FWHM is generated by applying an electronic pulse to the probe beam A/O modulator (not shown). A portion of the pulsed probe beam 320 is divided at a beam-splitter 326 before the vapor cell 302 and aligned onto photo diode D1 by mirror 327 as a reference. Because the total number of atoms in the probe volume limits the maximum net energy gain of the probe pulse, a very weak probe beam (< 1 $\mu$W) is used in order to avoid saturation and hence to optimize the anomalous dispersion. A second quarter wave plate 330 converts the circularly polarized probe and Raman beams 320, 318, respectively, back into linear polarization. After traversing the vapor cell 302, a polarization beam splitter 328 transmits the Raman pump beams 318 and reflects the probe beam 320 onto a second photo detector (D2).

The second photo detector (D2) is preferably a high sensitivity avalanche photo diode, reverse-biased below breakdown, to measure the weak probe pulse 320 that propagates through the vapor cell 302. The photoelectric current produced by detector D2 is converted to a voltage signal, preferably using a 500$\Omega$ load resistor (not shown) and recorded by a digitizing oscilloscope or PC so equipped 332 using a synchronized output signal from the pulse generator as the trigger. Pulses from detector D1 are similarly recorded.

In order to measure the pulse propagation time, the diode laser that produces the Raman pump 318 and probe 320 beams are first tuned far off-resonance from the 852 nm Cesium D$_2$ lines (by 2.5 GHz) to measure the time-dependent probe pulse intensity. When the laser is placed far off-resonance, the atoms have no effect and the probe pulse propagates at the speed $c$ inside the vapor cell 302. The diode laser is then tuned back to within the Doppler absorption profile and lock it on its side. Using the same synchronized pulse generator output signal as the trigger, the time-dependent probe pulse intensity measured by detector D2 is recorded.

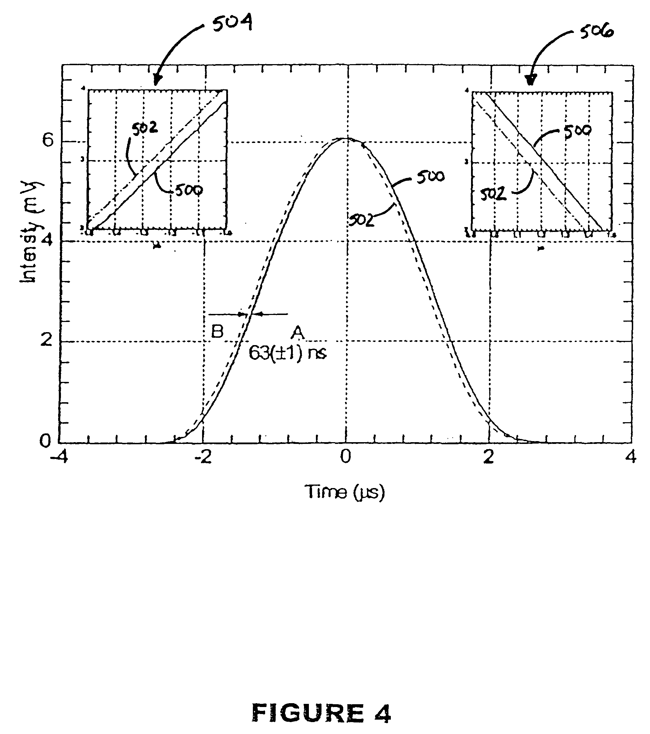

Verification that no systematic drift is present is achieved by tuning the laser off-resonance again by the same amount and recording the probe pulse signal. The two off-resonance pulses are identical to within less than 1 ns. Probe pulses both on and off-resonance are shown in Figure 4. Examples of probe pulses on resonance show a 40% transmittance and this is due to the broadband absorption of those atoms reverse pumped away from the $|F = 4, m = -4\rangle$ state. It is evident that there is almost no change in the pulse shape 500, 502. The front edges and the trailing edges of the pulses are shown in the insets 504, 506, respectively; both edges of pulse 502 are shifted forward by the same amount.

Using a least square fitting procedure, a pulse advancement shift of 62 ($\pm$1) nsec is obtained. Compared with the 0.2 nsec propagation time for light to traverse the 6-cm length of the vapor cell 302 in vacuum, the 62 nsec advancement gives an effective group index of $n_g$= -310 ($\pm$5). The small discrepancy with the group index inferred from the refractive index data is due to experimental errors. The pulses measured with detector D1 are also recorded in the sequence of the off-, on-, off-resonance pulse propagation measurements and are found to be identical to within 1.5 ns.

It should be noted that the physical mechanism that governs the observed superluminal light propagation differs from the previously studied anomalous dispersion associated with an absorption or a gain resonance. Specifically, in the anomalous dispersion region of a regular gain resonance, the superluminal propagation of a pulse can be viewed as the result of the amplification of the pulse front edge and absorption of its tail. In the illustration of the apparatus of the present invention, the 3.5 $\mu$sec (FWHM) probe pulse has only a 120 kHz bandwidth (FWHM) that is much narrower than the 2.7 MHz separation of the two gain lines and the probe pulse is preferably placed in the middle of these gain lines spectrally. Hence, the probe pulse contains essentially no spectral components that are resonant with the Raman gain lines to be amplified. Therefore, an argument that the probe pulse is advanced by amplification of its front edge does not apply. The superluminal light propagation observed here is the result only of the anomalous dispersion region created with the assistance of two nearby Raman gain resonances. It should be further stressed that the observed superluminal light propagation is a result of the wave nature of light. It can be understood by the classical theory of wave propagation in an anomalous dispersion region where interference between different frequency components produces this rather counterintuitive effect.

It should also be noted that the observed superluminal light pulse propagation is not at odds with causality or special relativity. In fact, the very existence of the lossless anomalous dispersion region given in Equation (1) is a result of the Kramers-Kronig's relation which itself is based on the causality requirements of electromagnetic responses. Remarkably, the signal velocity of a light pulse defined as the velocity at which the half point of the pulse front travels also exceeds the speed of light in vacuum, c, in the present invention. Of course, it has also been suggested that the true speed at which information is carried by a light pulse should be defined as the "frontal" velocity of a step-function shaped signal which has been shown to not exceed *c*. However, this definition does not appear to be in accord with the common laboratory signal generation and detection practice.

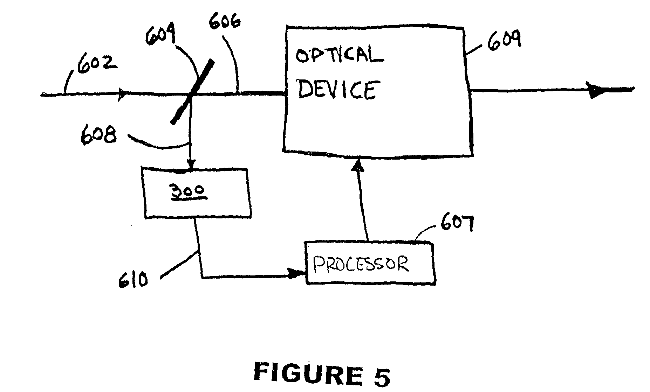

Referring now to Figure 5, there is shown a advance signal processing apparatus 600, having apparatus 300 therein. However, for purposes of this example only, apparatus 300 need not include detectors D1 and D2 or oscilloscope 332. The advance signal processing apparatus 600 merely makes use of the superluminal probe beam which exits apparatus 300 without the need for a comparison of the entering and exiting probe beams (e.g., there is no need to continually verify that the probe beam achieves superluminal velocity). An optical signal 602 input into the apparatus 600 is split by beam splitter 604 into first and second beams 606, 608, respectively. The first beam 606 is directed towards an optical device 609 for processing, such as an optical switch. The second beam 608 is incident upon the experimental set up 300 (referred to previously as the probe beam 320) and as a result exits with superluminal velocity, referred to as superluminal beam 610. Because of its superluminal velocity, the superluminal beam 610 is input into a processor 607 before beam 606 reaches the optical device 609. The processor detects the superluminal beam 610 and outputs a signal to the optical device 609 to perform processing of the first beam 606 when it gets to the optical device 609, such as routing it to another optical circuit (not shown).

It should be apparent to those skilled in the art that not all optical signals input into the advance signal processing apparatus need to be processed by device 609. It may be preferred to selectively process the input optical signals. This can be accomplished by selectively splitting the input optical signal for those signals that are to be processed by device 609 or splitting all input signals and only outputting a control signal to the optical device 609 for those signals that are to be processed thereby.

Apparatus 600 can also be used to detect the failure of the input optical signal 602 in advance of the failure being seen by the optical device 609. In this variation, the processor 607 can detect errors in the superluminal beam 610 since its shape is preserved or an interruption in the input optical signal and output a signal to the optical device 609 before the failure occurs at the optical device 609 to take some sort of corrective action. For example, if the optical device is a switch, the switch can switch over to an auxiliary input optical signal until the failure is corrected. Thus, failures in an optical signal can be "predicted" before they occur at an optical device and corrective action taken thereby guaranteeing a failure-free signal assuming a corrective action can always be taken.

While there has been shown and described what is considered to be preferred embodiments of the invention, it will, of course, be understood that various modifications and changes in form or detail could readily be made without departing from the spirit of the invention. It is therefore intended that the invention be not limited to the exact forms described and illustrated, but should be constructed to cover all modifications that may fall within the scope of the appended claims.

## Claims

1. A method for producing a region of anomalous dispersion in an atomic vapor, the method comprising the steps of:

   providing an atomic vapor having an atomic transition frequency and at least two ground states;
   introducing a first Raman pump light beam of a first frequency through the atomic vapor;
   introducing a second Raman pump light beam through the atomic vapor, the second Raman pump light beam having a second frequency different from the first frequency; and
   detuning the first and second Raman pump light beams from the atomic transition frequency of the atomic vapor towards the at least two ground states;

   wherein two Raman gain peaks are thereby produced resulting in a region of anomalous dispersion therebetween.

2. The method of claim 1, further comprising the step of containing the atomic vapor in a closed cell.

3. The method of claim 1 or 2, further comprising the step of producing a magnetic field in the closed cell parallel to the direction of the propagation of the first and second Raman pump light beams.

4. The method of one of the preceding claims, further comprising the step of shielding the magnetic field from earth's magnetic field.

5. An apparatus for producing a region of anomalous dispersion in an atomic vapor, the apparatus comprising:

   an atomic vapor having an atomic transition frequency and at least two ground states;
   a first laser for introducing a first Raman pump light beam of a first frequency through the atomic vapor;

a second laser for introducing a second Raman pump light beam through the atomic vapor, the second Raman pump light beam having a second frequency different from the first frequency; and

means for detuning the first and second Raman pump light beams from the atomic transition frequency of the atomic vapor towards the at least two ground states;

wherein two Raman gain peaks are thereby produced resulting in a region of anomalous dispersion therebetween.

6. The apparatus of claim 5, further comprising a closed cell for containing the atomic vapor therein.

7. The apparatus of claim 5 or 6, further comprising means for producing a magnetic field in the closed cell parallel to the direction of the propagation of the first and second Raman pump light beams.

8. The apparatus of one of claims 5 to 7, further comprising a magnetic shield around the closed cell for shielding the magnetic field from earth's magnetic field.

9. A method for achieving gain assisted superluminal light propagation of a probe beam, the method comprising the steps of:

(a) providing an atomic vapor having an atomic transition frequency and at least two ground states;
(b) preparing the atoms of the atomic vapor into one of the at least two ground states;
(c) introducing a first Raman pump light beam of a first frequency and first polarization through the atomic vapor;
(d) introducing a second Raman pump light beam through the atomic vapor, the second Raman pump light beam having the first polarization and a second frequency different from the first frequency;
(e) detuning the first and second Raman pump light beams from the atomic transition frequency of the atomic vapor towards the at least two ground states, wherein two Raman gain peaks are thereby produced resulting in a region of anomalous dispersion therebetween; and
(f) introducing the probe beam of a second polarization opposite from the first polarization through the atomic vapor in the region of anomalous dispersion thereby achieving superluminal propagation thereof.

10. The method of claim 9, further comprising the step of containing the atomic vapor in a closed cell having an interior defined by inside surfaces.

11. The method of claim 9 or 10, further comprising the step of producing a magnetic field in the closed cell parallel to the direction of the propagation of the first and second Raman pump light beams.

12. The method of one of claims 9 to 11, further comprising the step of shielding the magnetic field from earth's magnetic field.

13. The method of one of claims 9 to 11, further comprising the step of coating the inside surfaces of the closed cell for maintaining ground state spin polarization of the atomic vapor therein.

14. The method of one of claims 9 to 13, wherein the preparing step comprises introducing two pumping laser beams to optically pump the atoms of the atomic vapor into one of the at least two ground states.

15. The method of one of claims 9 to 14, wherein the two pumping beams are linearly polarized, the method further comprising the step of converting the polarization of the two pumping beams to circular polarization prior to their introduction through the atomic vapor.

16. The method of one of claims 9 to 15, wherein the first and second Raman pump light beams and probe beam are linearly polarized, the method further comprising the step of converting the polarization of the first and second Raman pump light beams and probe beam to circular polarization prior to their introduction through the atomic vapor.

17. The method of one of claims 9 to 16, further comprising the step of combining the first and second Raman pump light beams and probe beam into a single beam prior to their introduction through the atomic vapor.

18. An apparatus for achieving gain assisted superluminal light propagation of a probe beam, the apparatus comprising:

an atomic vapor having an atomic transition frequency and at least two ground states;
means for preparing the atoms of the atomic vapor into one of the at least two ground states;
a first laser for introducing a first Raman pump light beam of a first frequency and first polarization through the atomic vapor;
a second laser for introducing a second Raman pump light beam through the atomic vapor, the second Raman pump light beam having the first polarization and a second frequency different from the first frequency;

means for detuning the first and second Raman pump light beams from the atomic transition frequency of the atomic vapor towards the at least two ground states, wherein two Raman gain peaks are thereby produced resulting in a region of anomalous dispersion therebetween; and

a third laser for introducing a probe beam of a second polarization opposite from the first polarization through the atomic vapor in the region of anomalous dispersion thereby achieving superluminal propagation thereof.

19. The apparatus of claim 18, further comprising a closed cell for containing the atomic vapor therein, the closed cell having an interior defined by inside surfaces.

20. The apparatus of claim 18 or 19, further comprising means for producing a magnetic field in the closed cell parallel to the direction of the propagation of the first and second Raman pump light beams.

21. The apparatus of one of the claims 18 to 20, further comprising a magnetic shield around the closed cell for shielding the magnetic field from earth's magnetic field.

22. The apparatus of one of claims 19 to 21, further comprising a coating affixed to the inside surfaces of the closed cell for maintaining ground state spin polarization of the atomic vapor therein, the coating being present in sufficient amounts to maintain the ground state spin polarization of the atomic vapor therein.

23. The apparatus of one of the claims 19 to 22, wherein the coating is paraffin.

24. The apparatus of claim 18, wherein the means for preparing the atoms of the atomic vapor into one of the at least two ground states comprises first and second pumping lasers for providing and introducing two pumping laser beams to optically pump the atoms of the atomic vapor into one of the at least two ground states.

25. The apparatus of one of the claims 18 to 24, wherein the two pumping beams are linearly polarized, the apparatus further comprising means for converting the polarization of the two pumping beams to circular polarization prior to their introduction through the atomic vapor.

26. The apparatus of claim 25, wherein the means for converting the polarization of the two pumping beams to circular polarization comprises a quarter wave plate disposed in the optical path of the two pumping beams prior to their introduction through the atomic vapor.

27. The apparatus of one of the claims 18 to 25, wherein the first and second Raman pump light beams and probe beam are linearly polarized, the apparatus further comprising means for converting the polarization of the first and second Raman pump light beams and probe beam to circular polarization prior to their introduction through the atomic vapor.

28. The apparatus of claim 25, wherein the means for converting the polarization of the first and second Raman pump light beams and probe beam to circular polarization comprises a quarter wave plate disposed in the optical path of the first and second Raman pump light beams and probe beam prior to their introduction through the atomic vapor.

29. The apparatus of one of claims 18 to 28, further comprising means for combining the first and second Raman pump light beams and probe beam into a single beam prior to their introduction through the atomic vapor.

30. The apparatus of claim 29, wherein the means for combining the first and second Raman pump light beams and probe beam into a single beam comprises a polarization combining cube which either transmits or reflects the first and second Raman pump light beams and the other of transmits or reflects the probe beam.

31. The apparatus of one of claims 18 to 31, wherein the atomic vapor is an alkali metal.

32. The apparatus of claim 31, wherein the alkali metal is selected from a group consisting of Cesium and Rubidium.

33. An apparatus for the advanced detection of an input optical signal, the apparatus comprising:

a beam splitter for splitting the input optical signal into first and second beams;
an optical device in which the first beam is input;
means for accelerating the second beam to superluminal velocity; and
a processor in which the accelerated second beam is input, the processor detecting the presence of the accelerated second beam and controlling the optical device in advance of the arrival of the first beam at the optical device based on the input of the accelerated second beam.

**34.** The apparatus of claim 33, wherein the optical device comprises an optical switch for switching the second beam to one of at least two optical circuits.

**35.** The apparatus of claim 33 or 34, wherein the processor selectively controls the optical switch based upon the detection of the accelerated second beam.

**36.** The apparatus of one of claims 33 to 35, wherein the means for accelerating the second beam to superluminal velocity comprises:

an atomic vapor having an atomic transition frequency and at least two ground states;
means for preparing the atoms of the atomic vapor into one of the at least two ground states;
a first laser for introducing a first Raman pump light beam of a first frequency and first polarization through the atomic vapor;
a second laser for introducing a second Raman pump light beam through the atomic vapor, the second Raman pump light beam having the first polarization and a second frequency different from the first frequency;
means for detuning the first and second Raman pump light beams from the atomic transition frequency of the atomic vapor towards the at least two ground states, wherein two Raman gain peaks are thereby produced resulting in a region of anomalous dispersion therebetween; and
means for introducing the second beam of a second polarization opposite from the first polarization through the atomic vapor in the region of anomalous dispersion thereby achieving superluminal propagation thereof.

**37.** An apparatus for the advanced detection of the failure of an input optical signal, the apparatus comprising:

a beam splitter for splitting the input optical signal into first and second beams;
an optical device in the path of the first beam;
means for accelerating the second beam to superluminal velocity; and
a processor in the optical path of the accelerated second beam for detecting a failure in the second accelerated beam and controlling the optical device in advance of the failure of the first beam at the optical device.

**38.** The apparatus of claim 37, wherein the optical device comprises an optical switch which switches to receive a second input optical beam and relaying the same to an optical circuit.

**39.** The apparatus of claim 37 or 38, wherein the processor selectively controls the optical switch based upon the detection of the failure of the accelerated second beam.

**40.** The apparatus of one of claims 37 to 39, wherein the means for accelerating the second beam to superluminal velocity comprises:

an atomic vapor having an atomic transition frequency and at least two ground states;
means for preparing the atoms of the atomic vapor into one of the at least two ground states;
a first laser for introducing a first Raman pump light beam of a first frequency and first polarization through the atomic vapor;
a second laser for introducing a second Raman pump light beam through the atomic vapor, the second Raman pump light beam having the first polarization and a second frequency different from the first frequency;
means for detuning the first and second Raman pump light beams from the atomic transition frequency of the atomic vapor towards the at least two ground states, wherein two Raman gain peaks are thereby produced resulting in a region of anomalous dispersion therebetween; and
means for introducing the second beam of a second polarization opposite from the first polarization through the atomic vapor in the region of anomalous dispersion thereby achieving superluminal propagation thereof.

**41.** The apparatus of one of claims 37 to 40, wherein the failure is a data error in the input optical signal.

**42.** The apparatus of one of claims 37 to 40, wherein the failure is an interruption in the input optical signal.

**FIGURE 1a**

**FIGURE 1b**

FIGURE 2

**FIGURE 3**

**FIGURE 4**

FIGURE 5